# EUROPÄISCHE PATENTSCHRIFT

(11) **EP 1 419 909 B1**
(45) Veröffentlichungstag und Bekanntmachung des Hinweises auf die Patenterteilung: **16.04.2008**
(21) Anmeldenummer: 03024313.3
(22) Anmeldetag: 24.10.2003
(51) Int. Cl.: B60G 3/18

(54) **Vierlenker-Hinterradachse für ein Kraftfahrzeug**
Four link rear axle suspension for a vehicle
Essieu arrière de véhicule à quatre bras

(30) Priorität: 15.11.2002 DE 10253265
(43) Veröffentlichungstag der Anmeldung: 19.05.2004
(73) Patentinhaber: Volkswagen Aktiengesellschaft, 38436 Wolfsburg (DE)
(72) Erfinder: Hinze, Thilo, Dr., 38170 Kneitlingen/Ampleben (DE)

(56) Entgegenhaltungen:
- EP-A- 0 302 226
- US-A- 4 696 488
- US-A- 4 740 012
- US-A- 4 973 069
- US-A- 5 009 449
- US-B1- 6 357 772
- PATENT ABSTRACTS OF JAPAN Bd. 009, Nr. 206 (M-406), 23. August 1985 (1985-08-23) -& JP 60 067207 A (MAZDA KK), 17. April 1985 (1985-04-17)
- PATENT ABSTRACTS OF JAPAN Bd. 1995, Nr. 01, 28. Februar 1995 (1995-02-28) -& JP 06 278427 A (TOYOTA MOTOR CORP), 4. Oktober 1994 (1994-10-04)
- PATENT ABSTRACTS OF JAPAN Bd. 017, Nr. 455 (M-1466), 20. August 1993 (1993-08-20) -& JP 05 104921 A (NISSAN MOTOR CO LTD), 27. April 1993 (1993-04-27)
- PATENT ABSTRACTS OF JAPAN Bd. 009, Nr. 187 (M-401), 3. August 1985 (1985-08-03) -& JP 60 053412 A (MAZDA KK), 27. März 1985 (1985-03-27)

## Beschreibung

Die Erfindung bezieht sich auf eine Vierlenker-Hinterradachse für ein Kraftfahrzeug nach dem Oberbegriff von Patentanspruch 1.

Mehrlenker-Hinterradachsen sind im Zusammenhang mit Kraftfahrzeugen allgemein bekannt. So wird beispielsweise in Reimpell: Fahrwerktechnik - Grundlagen, Vogelverlag, 3. Auflage, 1995, auf Seite 14 eine Mehrlenker-Hinterachse in der Art einer Doppelquerlenker-Radaufhängung offenbart, die je Fahrzeugseite einen Längslenker aufweist, der von zwei Querlenkern geführt wird. Die Längslenker dienen gleichzeitig als Radträger und sind jeweils über ein elastokinematisches Lager gegen den Fahrzeugaufbau abgestützt. Die Querlenker sind übereinanderliegend angeordnet. Miniblockfedern stützen die obenliegenden Querlenker gegen den Fahrzeugaufbau ab. Weiterhin sind zwei Schwingungsdämpfer vorgesehen, die oben Zusatzfedern tragen. Diese Schwingungsdämpfer greifen hinter der Radmitte an den Enden der Längslenker an und verlaufen hinter den Querträgern im wesentlichen senkrecht nach oben.

Bei dieser bekannten Mehrlenker-Hinterradachse verlaufen die Querlenker in Bezug auf die Fahrzeuglängsrichtung und die Fahrzeugquerrichtung schräg, um zusammen mit unterschiedlichen Gummihärten der Lager günstige Fahreigenschaften zu erreichen.

Angestrebt wird hierbei insbesondere ein Vorspureffekt unter Bremskräften, ein Seitenkraftuntersteuern bei Kurvenfahrt oder wenigstens ein neutrales Verhalten, das Verhindern von Lastwechselreaktionen sowie eine gute Spurwechsel- und Geradeauslaufsstabilität.

Aus der JP 60067207 A ist eine Vierlenker-Hinterradachse mit den Merkmalen des Oberbegriffs von Patentanspruch 1 bekannt. Bei dieser wird durch eine weiche Ausbildung der Lager des vorderen, unteren Querlenkers seitenkraftbedingten Übersteuerungstendenzen entgegenwirkt.

Aus der EP 0 302 226 A2 ist bekannt einfederungsbedingte Übersteuerungstendenzen zu bekämpfen. Federt bei der dort offenbarten Vierlenker-Hinterachse ein Rad ein, so kommt es zu einem Schwenken des Längslenkers um das aufbauseitigen Gelenk. Ein untersteuerndes Lenkverhalten resultiert aus der vertikalen Schwenkbarkeit der Querlenker beim Einfedern.

Aus der US 4,696,488 A (D4) ist eine weitere Vierlenker-Hinterachse bekannt, mit der ein Übersteuern vermieden werden soll.

Weitere Vierlenker-Hinterachsen werden in der JP 6278427 A und der US 4,973,069 A beschrieben.

Vor diesem Hintergrund liegt der Erfindung die Aufgabe zugrunde, das Eigenlenkverhalten einer Vierlenker-Hinterradachse zu verbessern, wobei eine gute Fahrdynamik und ein hoher Fahrkomfort gewährleistet bleiben soll.

Zur Lösung dieser Aufgabe wird eine Vierlenker-Hinterradachse gemäß Patentanspruch 1 vorgeschlagen.

Die erfindungsgemäße Lösung erlaubt durch die Vielzahl der Lenker eine hohe Flexibilität der Fahrwerkabstimmung im Hinblick auf Fahrdynamik und Fahrkomfort. Insbesondere erlaubt die vorgeschlagene Lenkeranordnung eine weitgehende Trennung zwischen der Längsanbindung und der Queranbindung. Dies ermöglicht es, die Längslenkerlager am Fahrzeugaufbau verhältnismäßig weich und damit für den Fahrkomfort vorteilhaft auszugestalten, ohne daß hierdurch die Fahrdynamik wesentlich beeinträchtigt würde. Die Fahrdynamik-Optimierung kann vielmehr über die Ausgestaltung der Querlenker vorgenommen werden.

Gemäß der vorliegenden Erfindung ist die Gesamtsteifigkeit der vorderen, unteren Querlenker-Lager-Anordnungen deutlich weicher, als die der übrigen Querlenker-Lager-Anordnungen. Es hat sich gezeigt, daß sich unter einer solchen Vorgabe bei hohem Fahrkomfort ein neutrales oder leicht untersteuerndes Fahrverhalten realisieren läßt, das dem Fahrer des Fahrzeugs das Gefühl von Agilität vermittelt.

Um bei stark eingefedertem Rad, das heißt bei einer extremen Kurvenfahrt die Fahrstabilität zu verbessern, wird die erfindungsgemäße Vierlenker-Hinterradachse so ausgebildet, daß die elastokinematischen Lager der Längslenker in Fahrzeüglängsrichtung nachgiebig sind und je Fahrzeugseite ein Schwingungsdämpfer vorgesehen ist, der mit einem Ende hinter und unterhalb der Radmitte auf den Radträger einwirkt und mit seinem oberen, am Fahrzeugaufbau angekoppelten Ende nach vorn geneigt ist.

Die Anordnung des Schwingungsdämpfers und insbesondere dessen Neigung in Fahrzeuglängsrichtung bewirkt bei einer starken Einfederung in Verbindung mit der oben erläuterten Lenkerkonfiguration einen zusätzlichen, korrigierenden Vorspureffekt, mit dem selbst unter extremen Fahrbedingungen ein neutrales oder untersteuerndes Fahrverhalten gewährleistet werden kann. Zudem bleibt die entsprechende Einzelradaufhängung in ihren Abmessungen kompakt und ermöglicht eine hohe Durchladebreite und niedrige Ladekante.

Es hat sich gezeigt, daß es hierfür besonders günstig ist, wenn der Neigungswinkel des Schwingungsdämpfers in Fahrzeuglängsrichtung zur Vertikalen in einem Bereich von 10 bis 30 Grad liegt.

Die Gesamtsteifigkeit der Querlenker-Lager-Anordnung des vorderen, unteren Querlenkers beträgt in vorteilhafter Ausgestaltung jeweils weniger als 80 Prozent der Gesamtsteifigkeit der anderen Querlenker-Lager-Anordnungen.

Vorzugsweise erfolgt die Differenzierung der Steifigkeit an den einzelnen Querlenkern durch die Ausgestaltung des jeweiligen, aufbauseitigen Lenkerlagers. Bei Verwendung von Gummi-Metall-Lagern ist hierbei die Gummisteifigkeit das wesentliche Abstimmungsmittel.

In einer vorteilhaften Ausgestaltung der Erfindung sind die Querlenker jeweils über ein Gelenk an einem Radträger angekoppelt. Der Radträger kann dabei integral mit dem Längslenker ausgebildet sein, ist jedoch vorzugsweise ein eigenständiges Element, das an dem Längslenker angeschlossen ist. Durch die individuelle Ankopplung der Querlenker kann bei einmal festgelegter Konfiguration der Lenkerwinkel in einer Großserie eine Abstimmung des Fahrwerks für unterschiedliche Anforderungen vorgenommen werden, indem lediglich die Lenkerlagerelastizitäten modifiziert werden. So ist es beispielsweise dadurch verhältnismäßig einfach möglich, neben einer Serienversion eine Sportversion der Fahrwerksabstimmung anzubieten.

Vorzugsweise greift der vordere, untere Querlenker vor und unterhalb der Radmitte an dem Radträger an. Günstig ist insbesondere eine Anordnung, bei der der vordere, untere Querlenker sich unter einem Winkel von 10 bis 60 Grad, vorzugsweise 10 bis 30 Grad, zur Fahrzeugquerrichtung vom Radträger schräg nach vorn erstreckt.

Auch der hintere, untere Querlenker greift vorzugsweise unterhalb der Radmitte an dem Radträger an, jedoch liegt der Angriffspunkt hinter der Radmitte. Dabei empfiehlt sich insbesondere eine Anordnung, bei der der hintere, untere Querlenker sich unter einem Winkel von 10 bis 30 Grad zur Fahrzeugquerrichtung vom Radträger schräg nach hinten erstreckt.

Beide Lenker können dabei eine gemeinsame, untere Lenkerebene aufspannen.

In einer weiteren, vorteilhaften Ausgestaltung der Erfindung greift der obere Querlenker bezogen auf die Fahrzeuglängsrichtung zwischen den unteren Querlenkern oberhalb der Radmitte an dem Radträger an. Diese erfolgt vorzugsweise so, daß der obere Querlenker sich unter einem Winkel von 0 bis 60 Grad, insbesondere 10 bis 30 Grad, zur Fahrzeugquerrichtung vom Radträger in Fahrzeugquerrichtung bzw. schräg nach vorn erstreckt.

Gemäß einer weiteren, vorteilhaften Ausgestaltung wird der Schwingungsdämpfer so angeordnet, daß seine Kraftwirkungslinie in Fahrzeugquerrichtung die Radaufstandsfläche stets auf der Innenseite des Radaufstandspunkts schneidet. Diese erlaubt eine in Fahrzeugquerrichtung schmale Ausgestaltung und gewährleistet ein kontinuierliches Fahrverhalten in der Kurve. Den aus den Seitenkräften resultierenden Kippmomenten in Fahrzeugquerrichtung, die einen Nachspureffekt bewirken, wird durch die Vorwärtsneigung des Schwingungsdämpfers entgegengewirkt.

Vorzugsweise erfolgt die Abstimmung der Neigungswinkel des Schwingungsdämpfers in Fahrzeuglängsrichtung und in Fahrzeugquerrichtung derart, daß bei maximaler Einfederung der Nachspureffekt aus dem Kippmoment in Fahrzeugquerrichtung durch einen Vorspureffekt aus der Vorwärtsneigung des Schwingungsdämpfers kompensiert ist.

Nachfolgend wird die Erfindung anhand eines in der Zeichnung dargestellten Ausführungsbeispiels näher erläutert. Die Zeichnung zeigt in:
- Figur 1: eine schematische räumlichen Ansicht einer Vierlenker-Hinterradachse in Form einer Einzelradaufhängung für ein Kraftfahrzeug nach der Erfindung,
- Figur 2: eine schematische Draufsicht der Vierlenker-Hinterradachse nach Figur 1 in Ruhestellung,
- Figur 3: eine schematische Draufsicht der Vierlenker-Hinterradachse nach Figur 1 unter Seitenkrafteinfluß,
- Figur 4: eine schematische Ansicht von hinten der Vierlenker-Hinterradachse nach Figur 1 in Ruhestellung,
- Figur 5: eine schematische Seitenansicht der Vierlenker-Hinterradachse nach Figur 1 in Ruhestellung, und in
- Figur 6: eine schematische Draufsicht auf die untenliegenden Querlenker der Vierlenker-Hinterradachse nach Figur 1 unter Seitenkrafteinfluß.

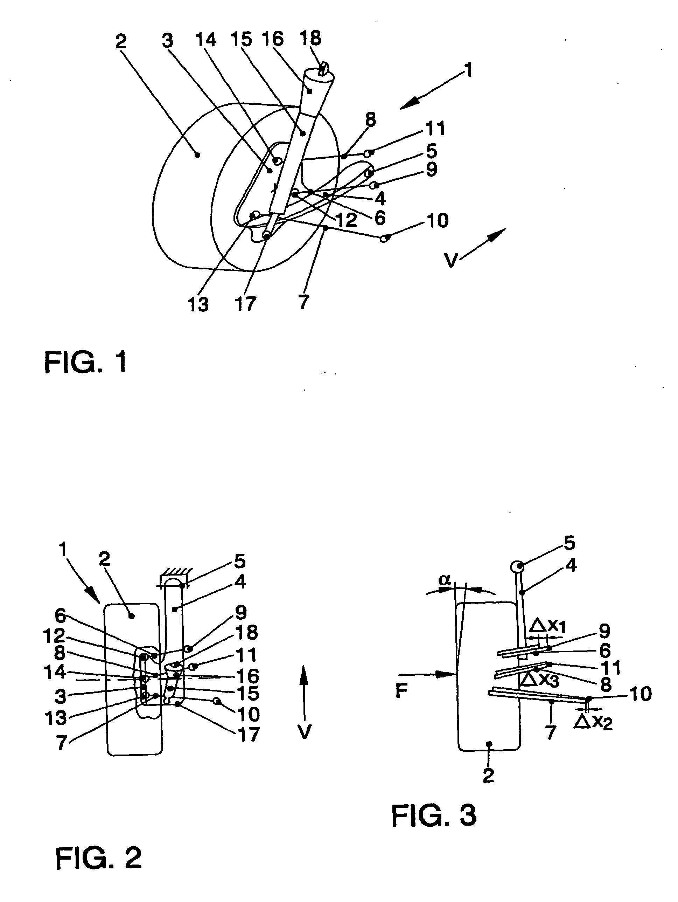

Das in den Figuren 1 bis 6 dargestellte Ausführungsbeispiel zeigt eine Vierlenker-Hinterradachse 1 für ein Kraftfahrzeug im Zusammenhang mit einem Fahrzeugrad 2. Das Fahrzeugrad 2 wird hier nicht angetrieben. Jedoch ist die nachfolgend erläuterte Vierlenker-Hinterradachse auch an angetriebenen Hinterrädern einsetzbar.

Wie Figur 1 entnommen werden kann, ist das Fahrzeugrad 2 an einem Radträger 3 gelagert. Der Radträger 3 ist über vier Radführungsglieder gegen den nicht näher dargestellten Fahrzeugaufbau abgestützt. Je Fahrzeugseite ist dabei ein um die Fahrzeugachse biegeweicher Längslenker 4 vorgesehen, der starr mit dem Radträger 3 verbunden ist. Alternativ kann auch ein biegesteifer Längslenker elastisch mit dem Radträger verbunden sein. Entscheidend ist, daß kleine Lenkbewegungen des Radträgers durch den Längslenker oder dessen Anbindung zugelassen werden.

Die Ankopplung am Fahrzeugaufbau erfolgt über ein elastokinematisches Lager 5, das im Hinblick auf einen hohen Fahrkomfort in Fahrzeuglängsrichtung weich ausgebildet ist, um die Übertragung von Stößen und Schwingungen vom Fahrzeugrad 2 an den Fahrzeugaufbau zu dämpfen bzw. zu unterbinden.

Weiterhin sind je Fahrzeugseite drei Querlenker 6, 7 und 8 vorgesehen, die sich jeweils mit einem Ende über ein elastokinematisches Lager 9, 10 bzw. 11 gegen den Fahrzeugaufbau abstützen und mit ihrem anderen Ende jeweils über ein Gelenk 12, 13 bzw. 14 an dem Radträger 3 angekoppelt sind.

Zwei der Querlenker 6 und 7 sind in einer unteren Kraftebene unterhalb der Radmitte M angeordnet, wohingegen der dritte Querlenker 8 in einer zweiten Kraftebene oberhalb der Radmitte M liegt. Dabei greift der vordere, untere Querlenker 6, der hier als Spurstange ausgebildet ist, vor der Radmitte M an dem Radträger 3 an. Er erstreckt sich unter einem Winkel von 10 bis 60 Grad, vorzugsweise 10 bis 30 Grad, zur Fahrzeugquerrichtung vom Radträger 3 schräg nach vorn.

Der hintere, untere Querlenker 7 ist als Federlenker ausgebildet und greift hinter der Radmitte M an dem Radträger 3 an. Er erstreckt sich unter einem Winkel von 10 bis 30 Grad zur Fahrzeugquerrichtung vom Radträger 3 schräg nach hinten und ist etwas länger als der vordere, untere Querlenker 6.

Der obere Querlenker 8 ist, bezogen auf die Fahrzeuglängsrichtung, zwischen den unteren Querlenkern 6 und 7 an dem Radträger 3 angekoppelt. Er verläuft unter einem Winkel von 0 bis 60 Grad, vorzugsweise 10 bis 30 Grad, zur Fahrzeugquerrichtung vom Radträger 3 in Fahrzeugquerrichtung bzw. schräg nach vorn. Seine Länge entspricht in etwa derjenigen des vorderen, unteren Querlenkers 6.

Die vorstehend erläuterte Lenker-Anordnung ermöglicht aufgrund der Verwendung von drei Querlenkern 6, 7 und 8 in Dreibeinanordnung eine weitgehende Trennung zwischen der Längskraftabstützung und der Querkraftabstützung des Fahrzeugrades 2. Das elastokinematische Lager 5 des Längslenkers 4 kann daher verhältnismäßig weich ausgestaltet werden, da dieses aufgrund der Querabstützung über die drei Querlenker 6, 7 und 8 die Fahrdynamik lediglich in geringem Umfang beeinflußt. Vielmehr erfolgt die Optimierung der Fahrdynamik primär über die Querlenker 6, 7 und 8 in der nachfolgend erläuterten Art und Weise.

Hauptüberlegung ist dabei, durch eine gezielte Kombination der Steifigkeiten der Querlenker 6, 7 und 8 sowie der zugehörigen elastokinematischen Lager 9, 10 und 11 einen Vorspureffekt zu erzeugen, mit dem unter Einwirkung einer Seitenkraft F ein neutrales bis leicht untersteuerndes Fahrverhalten erzielt wird, indem Übersteuerungstendenzen, welche vor allem aus der Anbindung der Längslenker 4 resultieren, entgegengewirkt wird.

Dazu ist bei der erfindungsgemäßen Vierlenker-Hinterradachse der in Fahrzeugrichtung vornliegende, weiter untenliegende Querlenker 6 zusammen mit seinen Lagern mit einer geringeren Gesamtsteifigkeit ausgebildet als die anderen Querlenker-Lager-Anordnungen.

Die hieraus resultierende Vorspurkorrektur unter Seitenkrafteinfluß läßt sich den Figuren 2 und 3 anschaulich entnehmen. Aufgrund der geringeren Gesamtsteifigkeit resultiert aus der im Radaufstandspunkt R angreifenden Seitenkraft F an dem vorderen, unteren Querlenker 6 des kurvenaußenseitigen Rades eine größere Verschiebung Δx₁ in Fahrzeugquerrichtung als an den weiteren Querlenker 7 und 8 (vgl. Verschiebungen Δx₂ und Δx₃). Dadurch erhält das Fahrzeugrad 2 einen Lenkeinschlag α in die Kurve. Am Fahrzeug wird folglich der Lenkwinkel verringert. Dabei treten in den unteren Querlenkern 6 und 7 und Druckkräfte, in dem oberen Querlenker 8 hingegen eine Zugkraft auf.

Durch die gezielte Beeinflussung der Steifigkeitsverhältnisse läßt sich das Fahrverhalten der Radaufhängung abstimmen. Dies erfolgt bevorzugt über die Lagersteifigkeiten der aufbauseitigen Lenkerlager 9, 10 und 11. Die Gesamtsteifigkeit der Querlenker-Lager-Anordnung des vorderen, unteren Querlenkers 6 beträgt dabei auf jeden Fall jeweils weniger als 80 Prozent der Gesamtsteifigkeit der anderen Querlenker-Lager-Anordnungen, um den vorstehend erläuterten Vorspureffekt zu gewährleisten.

Als elastokinematische Lenkerlager 9, 10 und 11 werden vorzugsweise Gummi-Metall-Lager verwendet, die es ermöglichen, bei gegebener Lenkergeometrie die Fahrwerkabstimmung ohne großen Aufwand an unterschiedliche Anforderungen anzupassen. Aufgrund der weitgehenden Entkopplung zwischen der Längsabstützung und der Querabstützung bleibt der Fahrkomfort im wesentlichen unberührt von einem etwas stärkeren oder etwas schwächeren Untersteuerungsverhalten.

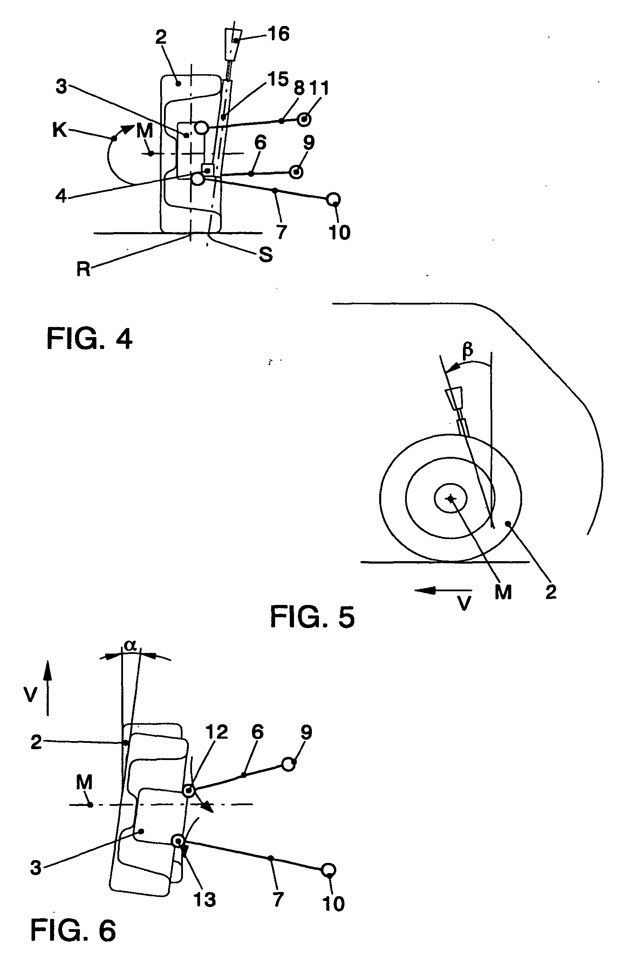

Wie insbesondere den Figuren 1 und 5 entnommen werden kann, weist die Vierlenker-Hinterradachse je Fahrzeugseite weiterhin einen Schwingungsdämpfer 15 auf, der an seinem oberen Ende eine Zusatzfeder 16 trägt. Der Schwingungsdämpfer 15 stützt sich mit seinem unteren Ende an dem Radträger 3, alternativ auch an dem Längslenker 4 ab. Die Ankopplung ist dabei so gewählt, daß die Kräfte des Schwingungsdämpfers 15 hinter und unterhalb der Radmitte M auf den Radträger 3 einwirken.

Bei dem hier dargestellten Ausführungsbeispiel liegt der radseitige Anlenkpunkt 17 des Schwingungsdämpfers 15 hinter den radseitigen Anlenkpunkten der unteren Querlenker 6 und 7, so daß der Schwingungsdämpfer 15 sich hinter bzw. über den Querlenkern erstreckt.

Wie insbesondere Figur 5 zeigt, ist der Schwingungsdämpfer 15 mit seinem oberen, am Fahrzeugaufbau angekoppelten Ende nach vom geneigt. Der Neigungswinkel β in Fahrzeuglängsrichtung zur Vertikalen liegt in einem Bereich von 10 bis 30 Grad. Somit hängt die Lage des aufbauseitigen Anlenkpunkts 18 vom Neigungswinkel β ab. Bei dem Ausführungsbeispiel liegt der aufbauseitige Anlenkpunkt 18 in bezug auf die Fahrzeuglängsrichtung bzw. Vorwärtsfahrtrichtung V zwischen den radseitigen Anlenkpunkten der unteren Querlenker 6 und 7.

Außerdem ist gewährleistet, daß die Kraftwirkungslinie des Schwingungsdämpfers 15 in Fahrzeugquerrichtung die Radaufstandsfläche in allen stabilen Fahrsituationen stets auf der Innenseite des Radaufstandspunkts R schneidet (vgl. Schnittpunkt S in Figur 4).

Damit wird selbst bei einem starken Einfedern des Rades 2, d. h. bei extremer Kurvenfahrt und einem Zusammenschieben der Zusatzfeder 16 auf Blockmaß, also im oberen Anschlag des Rades 2, eine ausreichende Fahrstabilität gewährleistet.

Die hierbei entstehenden, sehr hohen Kräfte, die außerhalb des Randaufstandspunktes R nahezu vertikal auf die Fahrbahn gerichtet sind, verursachen ein Kippmoment K, das durch die Querlenker 6, 7 und 8 abgestützt werden muß. Aus diesem Kippmoment K resultieren in den unteren Querlenker 6 und 7 Zugkraftkomponenten, in dem oberen Querlenker 8 hingegen eine Druckkraft. Ergibt sich in dem vorderen, unteren Querlenker 6 insgesamt eine Zugkraft, so führt dies bei einer geringeren Gesamtsteifigkeit des Querllenkers 6 gegenüber den Lenkern 7 und 8 zu einem unerwünschten Nachspurlenken des Fahrzeugrades 2.

Bei dem hier erläuterten Ausführungsbeispiel ist daher der Neigungswinkel des Schwingungsdämpfers 15 in Fahrzeuglängsrichtung und in Fahrzeugquerrichtung derart gewählt, daß bei maximaler Einfederung der Nachspureffekt aus dem Kippmoment K in Fahrzeugquerrichtung durch einen Vorspureffekt aus der Vorwärtsneigung β des Schwingungsdämpfers 15 kompensiert ist. Infolge der Neigung des Schwingungsdämpfers 15 nach vom ergibt sich gleichzeitig mit der Kraft der Zusatzfeder 16 eine Kraftkomponente, die das Fahrzeugrad 2 nach hinten drückt. Da das vordere Längslenkerlager 5 aus Komfortgründen bewußt weicher gestaltet ist, resultiert hieraus eine Bewegung des Fahrzeugrades 2 nach hinten.

Die Bewegung des Rades 2 nach hinten führt, wie Figur 6 zeigt, aufgrund der Pfeilung der unteren Querlenker 6 und 7 zu einem Vorspurlenken des Rades 2 (vgl. Vorspurwinkel α), so daß das Nachspurlenken, verursacht durch das Kippmoment K, vollständig oder zumindest weitgehend kompensiert wird.

Damit ist gewährleistet, daß sich selbst unter extremen Bedingungen über den gesamten Fahrbereich hinweg ein einheitliches Fahrverhalten ergibt.

Die vorstehend erläuterte Erfindung ermöglicht eine hohe Flexibilität der Fahrwerkabstimmung im Hinblick auf Fahrdynamik und Fahrkomfort. Eine weitgehende Trennung zwischen der Längsanbindung und der Queranbindung erlaubt eine weiche Ausgestaltung der Längslenkerlager am Fahrzeugaufbau. Dies ist für den Fahrkomfort vorteilhaft. Eine Fahrdynamik-Optimierung kann über die Abstimmung der Querlenker vorgenommen werden.

Jedoch ist die Erfindung nicht allein auf das vorstehend erläuterte Ausführungsbeispiel beschränkt. So können beispielsweise die Längslenker von einer strengen Längsausrichtung in Fahrzeuglängsrichtung abweichen. Vielmehr umfaßt die Erfindung alle in den Ansprüchen definierten Ausgestaltungsformen.

### BEZUGSZEICHENLISTE

- 1: Vierlenker-Hinterradachse
- 2: Fahrzeugrad
- 3: Radträger
- 4: Längslenker
- 5: elastokinematisches Längslenkerlager
- 6: vorderer, unterer Querlenker (Spurstange)
- 7: hinterer, unterer Querlenker (Federlenker)
- 8: oberer Querlenker
- 9: elastokinematisches Lenkerlager des Querlenkers 6
- 10: elastokinematisches Lenkerlager des Querlenkers 7
- 11: elastokinematisches Lenkerlager des Querlenkers 8
- 12: radseitiges Gelenk des Querlenkers 6
- 13: radseitiges Gelenk des Querlenkers 7
- 14: radseitiges Gelenk des Querlenkers 8
- 15: Schwingungsdämpfer
- 16: Zusatzfeder
- 17: radseitiger Anlenkpunkt des Schwingungsdämpfers 15
- 18: aufbauseitiger Anlenkpunkt des Schwingungsdämpfers 15
- F: Seitenkraft
- K: Kippmoment
- M: Radmitte
- R: Radaufstandspunkt
- S: Schnittpunkt Kraftwirkungslinie Schwingungsdämpfer 15 / Radaufstandsfläche
- V: Vorwärtsfahrtrichtung
- α: Vorspurwinkel
- β: Neigungswinkel des Schwingungsdämpfers 15 in Vorwärtsfahrtrichtung
- Δx: Verschiebung im elastokinematischen Lager unter Seitenkraft F

## Patentansprüche

1. Vierlenker-Hinterradachse für ein Kraftfahrzeug, umfassend einen Längslenker (4) und drei Querlenker (6, 7, 8), die zumindest teilweise über elastokinematische Lager (5, 9, 10, 11) am Fahrzeugaufbau angreifen, wobei
- zwei Querlenker (6, 7) weiter untenliegend und ein Querlenker (8) weiter obenliegend angeordnet sind
- der in Fahrzeugrichtung vornliegende der weiter untenliegenden Querlenker (6) zusammen mit seinen Lagern eine geringere Gesamtsteifigkeit aufweist als die anderen Querlenker-Lager-Anordnungen
**dadurch gekennzeichnet, daß**
- der vordere, untere Querlenker (6) sich unter einem Winkel von 10 bis 60 Grad, vorzugsweise 10 bis 30 Grad, zur Fahrzeugquerrichtung vom Radträger (3) schräg nach vorn erstreckt,
- der hintere, untere Querlenker (7) sich in Bezug auf die Fahrzeugquerrichtung vom Radträger (3) schräg nach hinten erstreckt,
- das elastokinematische Lager (5) des Längslenkers (4) in Fahrzeuglängsrichtung nachgiebig ist,
- ein Schwingungsdämpfer (15) vorgesehen ist, der mit einem Ende hinter und unterhalb der Radmitte (M) auf den Radträger (3) einwirkt und mit seinem oberen, am Fahrzeugaufbau angekoppelten Ende nach vorn geneigt ist, und
- der Neigungswinkel des Schwingungsdämpfers (15) in Fahrzeuglängsrichtung zur Vertikalen in einem Bereich von 10 bis 30 Grad liegt.

2. Vierlenker-Hinterradachse nach Anspruch 1, **dadurch gekennzeichnet, daß** ein Radträger (3) vorgesehen ist und die Querlenker (6, 7, 8) jeweils über ein Gelenk, vorzugsweise jeweils über ein elastokinematisches Lager (12, 13, 14) an dem-Radträger (3) angekoppelt sind.

3. Viertenker-Hinterradachse nach Anspruch 1 oder 2, **dadurch gekennzeichnet, daß** die Gesamtsteifigkeit der Querlenker-Lager-Anordnung des vorderen, unteren Querlenkers (6) jeweils weniger als 80 Prozent der Gesamtsteifigkeit der anderen Querlenker-Lager-Anordnungen beträgt.

4. Vierlenker-Hinterradachse nach einem der Ansprüche 1 bis 3, **dadurch gekennzeichnet, daß** der vordere, untere Querlenker (6) vor und unterhalb der Radmitte (M) an dem Radträger (3) angreift.

5. Vierlenker-Hinterradachse nach einem der Ansprüche 1 bis 4, **dadurch gekennzeichnet, daß** der hintere, untere Querlenker (7) hinter und unterhalb der Radmitte (M) an dem Radträger (3) angreift.

6. Vierlenker-Hinterradachse nach einem der Ansprüche 1 bis 5, **dadurch gekennzeichnet, daß** der hintere, untere Querlenker (7) sich unter einem Winkel von 10 bis 30 Grad zur Fahrzeugquerrichtung vom Radträger (3) schräg nach hinten erstreckt.

7. Vierlenker-Hinterradachse nach einem der Ansprüche 1 bis 6, **dadurch gekennzeichnet, daß** der obere Querlenker (8) bezogen auf die Fahrzeuglängsrichtung zwischen den unteren Querlenkern (6, 7) oberhalb der Radmitte (M) an dem Radträger (3) angreift.

8. Vierlenker-Hinterradachse nach einem der Ansprüche 1 bis 7, **dadurch gekennzeichnet, daß** der obere Querlenker (8) sich unter einem Winkel von 0 bis 60 Grad, vorzugsweise 10 bis 30 Grad, zur Fahrzeugquerrichtung vom Radträger (3) in Fahrzeugquerrichtung bzw. schräg nach vorn erstreckt.

9. Vierlenker-Hinterradachse nach einem der Ansprüche 1 bis 8, **dadurch gekennzeichnet, daß** der Schwingungsdämpfer (15) derart angeordnet ist, daß seine Kraftwirkungslinie in Fahrzeugquerrichtung die Radaufstandsfläche auf der Innenseite des Radaufstandspunkts schneidet.

10. Vierlenker-Hinterradachse nach einem der Ansprüche 1 bis 9, **dadurch gekennzeichnet, daß** der Neigungswinkel des Schwingungsdämpfers (15) in Fahrzeuglängsrichtung und in Fahrzeugquerrichtung derart gewählt ist, daß bei maximaler Einfederung der Nachspureffekt aus dem Kippmoment in Fahrzeugquerrichtung durch einen Vorspureffekt aus der Vorwärtsneigung des Schwingungsdämpfers kompensiert ist.

## Claims

1. Four-link rear wheel axle for a motor vehicle, comprising one longitudinal link (4) and three transverse links (6, 7, 8) which engage on the vehicle body at least partially by means of elastokinematic mounts (5, 9, 10, 11), with
- two transverse links (6, 7) being arranged so as to be situated lower and one transverse link (8) being arranged so as to be situated higher,
- the lower transverse link (6) which is foremost in the vehicle direction, together with its mounts, having a lower overall stiffness than the other transverse-link/mount arrangements,
**characterized in that**
- the front, lower transverse link (6) extends obliquely forward from the wheel carrier (3) at an angle from 10 to 60 degrees, preferably 10 to 30 degrees, with respect to the vehicle transverse direction,
- the rear, lower transverse link (7) extends obliquely rearward from the wheel carrier (3) with respect to the vehicle transverse direction,
- the elastokinematic mount (5) of the longitudinal link (4) is flexible in the vehicle longitudinal direction,
- a vibration damper (15) is provided which acts with one end on the wheel carrier (3) behind and below the wheel centre (M) and is inclined forward with its upper end which is coupled to the vehicle body, and
- the angle of inclination of the vibration damper (15) in the vehicle longitudinal direction with respect to the vertical is in a range from 10 to 30°.

2. Four-link rear wheel axle according to Claim 1, **characterized in that** a wheel carrier (3) is provided, and the transverse links (6, 7, 8) are in each case coupled to the wheel carrier (3) by means of a joint, preferably in each case by means of an elastokinematic mount (12, 13, 14).

3. Four-link rear wheel axle according to Claim 1 or 2, **characterized in that** the overall stiffness of the transverse-link/mount arrangement of the front, lower transverse link (6) is in each case less than 80 per cent of the overall stiffness of the other transverse-link/bearing arrangements.

4. Four-link rear wheel axle according to one of Claims 1 to 3, **characterized in that** the front, lower transverse link (6) engages on the wheel carrier (3) in front of and below the wheel centre (M).

5. Four-link rear wheel axle according to one of Claims 1 to 4, **characterized in that** the rear, lower transverse link (7) engages on the wheel carrier (3) behind and below the wheel centre (M).

6. Four-link rear wheel axle according to one of Claims 1 to 5, **characterized in that** the rear, lower transverse link (7) extends obliquely rearward from the wheel carrier (3) at an angle of 10 to 30 degrees with respect to the vehicle transverse direction.

7. Four-link rear wheel axle according to one of Claims 1 to 6, **characterized in that** the upper transverse link (8) engages on the wheel carrier (3) between the lower transverse links (6, 7) with respect to the vehicle longitudinal direction, and above the wheel centre (M).

8. Four-link rear wheel axle according to one of Claims 1 to 7, **characterized in that** the upper transverse link (8) extends in the vehicle transverse direction and obliquely forward from the wheel carrier (3) at an angle from 0 to 60 degrees, preferably 10 to 30 degrees, with respect to the vehicle transverse direction.

9. Four-link rear wheel axle according to one of Claims 1 to 8, **characterized in that** the vibration damper (15) is arranged such that its line of force action in the vehicle transverse direction intersects the wheel contact area on the inner side of the wheel contact point.

10. Four-link rear wheel axle according to one of Claims 1 to 9, **characterized in that** the angle of inclination of the vibration damper (15) in the vehicle longitudinal direction and in the vehicle transverse direction is selected such that, at maximum compression, the toe-out effect from the tilting moment in the vehicle transverse direction is compensated by a toe-in effect from the forward inclination of the vibration damper.

## Revendications

1. Essieu arrière de véhicule à quatre bras pour un véhicule automobile, comprenant un bras longitudinal (4) et trois bras transversaux (6, 7, 8), qui viennent en prise avec la carrosserie du véhicule au moins en partie par le biais de paliers élastocinématiques (5, 9, 10, 11),
- deux bras transversaux (6, 7) étant disposés plus vers le bas et un bras transversal (8) étant disposé plus vers le haut,
- le bras transversal le plus en avant dans la direction du véhicule des deux bras transversaux le plus vers le bas (6) présentant, conjointement avec ses paliers, une plus faible rigidité globale que les autres agencements de bras transversaux et de paliers,
**caractérisé en ce que**
- le bras transversal avant inférieur (6) s'étend obliquement vers l'avant suivant un angle de 10 à 60 degrés, de préférence de 10 à 30 degrés, par rapport à la direction transversale du véhicule, depuis les supports de roues (3),
- le bras transversal arrière inférieur (7) s'étend obliquement vers l'arrière par rapport à la direction transversale du véhicule depuis le support de roues (3),
- le palier élastocinématique (5) du bras longitudinal (4) est flexible dans la direction longitudinale du véhicule,
- un amortisseur d'oscillations (15) est prévu, lequel agit avec une extrémité derrière et en dessous du milieu des roues (M) sur le support de roues (3) et est incliné vers l'avant avec son extrémité supérieure accouplée à la carrosserie du véhicule, et
- l'angle d'inclinaison de l'amortisseur d'oscillations (15) dans la direction longitudinale du véhicule par rapport à la verticale est compris dans une plage de 10 à 30 degrés.

2. Essieu arrière de véhicule à quatre bras selon la revendication 1, **caractérisé en ce qu'**il est prévu un support de roues (3) et les bras transversaux (6, 7, 8) sont à chaque fois accouplés par le biais d'une articulation, de préférence par le biais d'un palier élastocinématiqùe (12, 13, 14), au support de roues (3).

3. Essieu arrière de véhicule à quatre bras selon la revendication 1 ou 2, **caractérisé en ce que** la rigidité globale de l'agencement de bras transversaux et de paliers du bras transversal avant inférieur (6) est à chaque fois inférieure à 80 pour-cent de la rigidité globale des autres agencements de bras transversaux et de paliers.

4. Essieu arrière de véhicule à quatre bras selon l'une quelconque des revendications 1 à 3, **caractérisé en ce que** le bras transversal avant inférieur (6) vient en prise avant et en dessous du milieu des roues (M) sur le support de roues (3).

5. Essieu arrière de véhicule à quatre bras selon l'une quelconque des revendications 1 à 4, **caractérisé en ce que** le bras transversal arrière inférieur (7) vient en prise à l'arrière et en dessous du milieu des roues (M) sur le support de roues (3).

6. Essieu arrière de véhicule à quatre bras selon l'une quelconque des revendications 1 à 5, **caractérisé en ce que** le bras transversal arrière inférieur (7) s'étend obliquement vers l'arrière suivant un angle de 10 à 30 degrés par rapport à la direction transversale du véhicule depuis le support de roues (3).

7. Essieu arrière de véhicule à quatre bras selon l'une quelconque des revendications 1 à 6, **caractérisé en ce que** le bras transversal supérieur (8) vient en prise par rapport à la direction longitudinale du véhicule entre les bras transversaux inférieurs (6, 7) au-dessus du milieu des roues (M) sur le support de roues (3).

8. Essieu arrière de véhicule à quatre bras selon l'une quelconque des revendications 1 à 7, **caractérisé en ce que** le bras transversal supérieur (8) s'étend dans la direction transversale du véhicule ou obliquement vers l'avant suivant un angle de 0 à 60 degrés, de préférence de 10 à 30 degrés, par rapport à la direction transversale du véhicule depuis le support de roues (3).

9. Essieu arrière de véhicule à quatre bras selon l'une quelconque des revendications 1 à 8, **caractérisé en ce que** l'amortisseur d'oscillations (15) est disposé de telle sorte que sa ligne d'action de force coupe dans la direction transversale du véhicule la surface d'appui des roues sur le côté interne du point d'appui des roues.

10. Essieu arrière de véhicule à quatre bras selon l'une quelconque des revendications 1 à 9, **caractérisé en ce que** l'angle d'inclinaison de l'amortisseur d'oscillations (15) dans la direction longitudinale du véhicule et dans la direction transversale du véhicule est choisie de telle sorte que pour une compression de ressort maximale l'effet de bâillement des roues dû au couple de basculement dans la direction transversale du véhicule soit compensé par un effet de pincement des roues dû à l'inclinaison vers l'avant de l'amortisseur d'oscillations.
